Europäisches Patentamt

European Patent Office

Office européen des brevets

(19)

(11) Veröffentlichungsnummer : **0 366 028 B1**

(12) # EUROPÄISCHE PATENTSCHRIFT

(45) Veröffentlichungstag der Patentschrift :
**10.02.93 Patentblatt 93/06**

(51) Int. Cl.$^5$ : **C04B 33/36, C04B 35/82, C04B 35/14, C04B 30/02**

(21) Anmeldenummer : **89119570.3**

(22) Anmeldetag : **21.10.89**

(54) **Verfahren zur Herstellung eines ton- und faserhaltigen Materials.**

(30) Priorität : **24.10.88 DE 3836217**

(43) Veröffentlichungstag der Anmeldung :
**02.05.90 Patentblatt 90/18**

(45) Bekanntmachung des Hinweises auf die
Patenterteilung :
**10.02.93 Patentblatt 93/06**

(84) Benannte Vertragsstaaten :
**AT BE CH DE ES FR GB GR IT LI LU NL SE**

(56) Entgegenhaltungen :
**EP-A- 0 206 989**
**EP-A- 0 288 070**
**AU-B- 498 863**
**BE-A- 624 215**

(73) Patentinhaber : **Broggini, Arturo**
**Glockenstrasse 24**
**W-4000 Düsseldorf 1 (DE)**

(72) Erfinder : **Broggini, Arturo**
**Glockenstrasse 24**
**W-4000 Düsseldorf 1 (DE)**

(74) Vertreter : **Fitzner, Ulrich, Dr.**
**Am Eichförstchen 2a**
**W-4030 Ratingen-Lintorf (DE)**

EP 0 366 028 B1

## Beschreibung

Die vorliegende Erfindung betrifft ein Verfahren zur Herstellung von ton- und faserhaltigem Material, das leicht und stabil ist, gegen Frost, Feuer und Witterung beständig ist und ein hohes Wärmedämmvermögen aufweist.

Tonhaltige Materialien werden heute in vielen Bereichen der Technik verwendet. Neben der Anwendung in der Keramik und Kunst zählt der Baustoffsektor zu den bevorzugten Einsatzgeöieten. bie bisher bekannten tonhaltigen Materialien weisen jedoch einige Nachteile auf. So dauert der Herstellungsprozeß relativ lange (3 bis 6 Tage). Besonders viel Zeit nimmt das Trocknen von großen Teilen in Anspruch. Bei diesem Trocknungsvorgang kommt es zur Verdampfung von Wasser. Je mehr Wasser verdampft, desto größer ist die Gefahr von Rißbildungen. Weiterer Nachteil herkömmlicher Materialien ist, daß sie vor dem Brand trocken sein müssen und bei schnellem Erhitzen und Kühlen Risse entstehen.

Tonhaltige leichtere Materialien mit einem spezifischen Gewicht von weniger als 0,25 g/m³ sind nur in Verbindung mit Kunststoffen stabil. Nachteilig ist, daß diese Stoffe brennbar sind.

Aus DE-OS 34 44 397, DE-PS 31 05 593, US-PS 45 29 630 und FR-PS 70 26 769 sind faserhaltige Tonmaterialien bekannt. Bei der Herstellung werden die Fasern zerkleinert und unter den rohen Ton gemischt. Eine entscheidende Verbesserung der Rißbildungseigenschaften läßt sich hierdurch jedoch nicht erreichen. Gleiches gilt für die AU-B 49 08 63, aus welcher die Verwendung von Glasfasern bekannt ist, welche einen Fadendurchmesser von ca. 12 μm und eine Faserlänge von weniger als 12 mm aufweisen.

Die vorliegende Erfindung hat sich nunmehr die Aufgabe gestellt, ein Verfahren zur Herstellung eines ton- und faserhaltigen Materials, bei welchem Fasern mit einem Durchmesser zwischen 10 und 20 μm mit Ton gemischt, das so erhaltene Material geformt, getrocknet und bei 600 bis 1600° C gebrannt wird, ohne die vorerwähnten Nachteile aufzuweisen.

Diese Aufgabe wird dadurch gelöst, daß vernetzte Fasern in Form von Wolle oder Matten, enthaltend Mineral- oder Kohlefasern mit einer Länge von mehr als 0,1 m mit flüssigem Ton oder Gemischen aus Ton, Bentonit und/oder Titandioxid und/oder Quarz vermischt, bei 250 bis 400° C bis zu zwei Stunden getrocknet, eine Stunde gebrannt und anschließend vier bis fünf Stunden abgekühlt werden.

Unter vernetzten Fasern werden hier alle Faserformen verstanden, die keine Einzelfasern darstellen. Denn mit letzteren lassen sich nicht die überraschenden erfindungsgemäßen Effekte erzielen.

Die Faserlängen liegen vorzugsweise bei 1 - 10 m Länge. Jedoch werden die Ergebnisse immer besser, je größer die Faserlänge ist. Da z.Zt. auf dem Markt nur Fasern mit einer Höchstlänge von 10 m angeboten werden, kommen diese bevorzugt zum Einsatz. Sowie längere Faserprodukte zu vertretbaren Preisen erhältlich sind, sollten diese eingesetzt werden.

Erfindungsgemäß werden Mineral- und Kohlefasern bevorzugt. Zusammensetzung und Eigenschaften typischer Fasern sind den folgenden Tabellen zu entnehmen:

## Tabelle 1

### Mineralische Glasfaser

| | |
|---|---|
| $SiO_2$ | 64,2 – 64,8 % |
| $Al_2O_3$ | 2,9 – 3,3 % |
| $Fe_2O_3$ | 0,1 – 0,5 % |
| $TiO_2$ | 0,1 % |
| $BaO$ | 2,4 – 2,5 % |
| $CaO$ | 6,5 – 6,7 % |
| $MgO$ | 2,9 – 3,1 % |
| $Na_2O$ | 13,7 – 14,4 % |
| $K_2O$ | 0,6 – 1,4 % |
| $SO_3$ | 0,1 – 0,2 % |
| $B_2O_3$ | 4,8 – 5,0 % |

Erweichungspunkt bei ca. 1150 - 1200°C

## Tabelle 2

Glasseide

| | |
|---|---|
| Spezifisches Gewicht | $2,54\ g/cm^3$ |
| Feuchtigkeitsgehalt in Lieferform | ca. 0,1 % |
| Feuchtigkeitsaufnahme im Normalklima | |
| $23^\circ C/50$ % relative Luftfeuchtigkeit | ca. 0,1 % |
| Wasserrückhaltevermögen | |
| (Quellwert = Sättigungsgrenze) | 0 |
| Trockenhitzebeständigkeit bei | |
| Dauereinwirkung | bis $315^\circ C$ |
| Erweichungspunkt | ca. $850^\circ C$ |
| Lichtbeständigkiet | sehr gut |
| Wetterbeständigkeit | sehr gut |
| Säurebeständigkeit | gut |
| Laugenbeständigkeit | bedingt |
| | beständig |
| Lösungsmittelbeständigkeit | beständig |
| Alterung | dauerbeständig |
| Schlichte | Silan |
| Schlichtegehalt % | ca. 1,5 % |
| Schlichte-Extraktionsmittel | Aceton |
| Chemische Analyse | $SiO$ | 52,4 % |
| | $AL_2O_3Fe_2O_2$ | 14,4 % |
| | $CaO$ | 17,2 % |
| | $MgO$ | 4,6 % |
| | $Na_2OK_2O$ | 0,8 % |
| | $B_2O_3$ | 10,6 % |
| | | 100,0 % |
| Faserdurchmesser | 13 $\mu m$ |

Unter flüssigem Ton sind mit Wasser vermischte Tone zu verstehen. Zu den einsetzbaren Tonen gehören u.a. Begußton, Glasurton, Blähton, Steinzeugton, Steingutton, Bentonit, Hafenton, Kapselton, Ziegelton und Mergelton.

Der Anteil der Glasfasern am Gesamtgefüge kann zwischen 2 und 13 Gew.-%, der des Wassers zwischen 28 und 85 Gew.-%, vorzugsweise zwischen 28 und 74 Gew.-% und der des Tons bzw. Tongemisches zwischen 2 und 70 Gew.-%, vorzugsweise zwischen 13 und 70 Gew.-% liegen. Einige Beispiele für die erfindungsgemäßen Zusammensetzungen sind der folgenden Tabelle zu entnehmen:

## Tabelle 3 (Anteile in Gew.-%)

| Beispiel Nr. | 1. | 2. | 3. | 4. | 5. | 6. |
|---|---|---|---|---|---|---|
| Glas u/o Mineralfasern | 2 | 5 | 10 | | 8 | 13 |
| Tonkomponente (Anteilig %) | 60 | 55 | 40 | | 27 | 30 |
| Wasser (Anteilig %) | 38 | 45 | 50 | | 65 | 57 |

Das gebrannte Endprodukt setzt sich in der Regel aus 2,7 - 5,0 Gew.-% Fasern und 97,3 - 50 Gew.-% Tonkomponenten zusammen. Der geringe erforderliche Anteil aus Glasfasern macht die vorliegende Erfindung insbesondere wirtschaftlich interessant, da Glasfasern sehr teuer sind. Ihre Anwendung war daher bisher auf hochwertige Produkte beschränkt.

Bei Einsatz eines Gemisches aus möglichst geringen Mengen Fasern und Ton sowie einem extrem hohen Wasseranteil lassen sich Materialien mit einem hohen Wärmedämmvermögen herstellen.

Hervorragende Ergebnisse werden vor allem dann erzielt, wenn die Anteile an Fasern und Ton bzw. Tongemischen gleich sind. Ganz besonders optimale Wärmedämmeigenschaften lassen sich demgemäß durch ein Gemisch erzielen, welches aus 1 Gew.-% Fasern, 1 Gew.-% Ton bzw. Tongemisch und 98 Gew.-% Wasser besteht. Allerdings nehmen hier die Stabilitätswerte des gebrannten Produktes stark ab. Derartige ton- und faserhaltige Materialien lassen sich deshalb nur dort einsetzen, wo es ausschließlich auf die Wärmedämmeigenschaften ankommt. Soll das Material auch mechanischen Belastungen standhalten, müssen die eingesetzten Anteile der Fasern zwischen 2 und 13 Gew.-%, die des Tons zwischen 70 und 2 Gew.-% und die des Wassers zwischen 28 und 85 Gew.-% liegen.

Das so hergestellte tonhaltige Material kann ausgeformt werden und zur Herstellung der verschiedensten gebrannten Tonerzeugnisse verwendet werden. Das erfindungsgemäße Material zeichnet sich hierbei besonders dadurch aus, daß das Trocknen, Brennen und Abkühlen des Tonmaterials höchstens 6 bis 8 Stunden dauert.

Für das Trocknen sind nunmehr nicht mehr als 2 Stunden erforderlich. Das Trocknen im Heißluftstrom bei 250 bis 400°C kann sogar innerhalb weniger Minuten abgeschlossen werden. bie Wasserverdampfung hat keine Verformung und Rißbildung zur Folge. Das Wasser verdampft zwischen den Fasern, hat jedoch nicht genügend Kraft die Fasern zu verschieben. bie Folge ist, daß bei der Trocknung des erfindungsgemäßen tonhaltigen Materials kaum Schrumpfungen auftreten. Dadurch wird gleichzeitig die Gefahr der Rißbildung ausgeschlossen.

Die überraschenden Eigenschaften des mit Ton bzw. Tongemischen getränkten Fasermaterials hängen damit zusammen, daß unzerkleinerte möglichst lange Fasern mit einem geringen Durchmesser von 10 - 20 µm, insbesondere 10 - 15 µm und einem Anteil von 1 - 13 Gew.-% bezogen auf das getrocknete, ungebrannte Gesamtgemisch eingesetzt werden. Denn hierdurch ist gewährleistet, daß zwischen den beschichteten Fasern genügend Raum zur Wasserverdampfung verbleibt. Aus diesem Grunde ist es auch nicht unbedingt erforderlich, das Material vor dem Brennen zu trocknen. Vielmehr kann das Wasser während des Erhitzens auf Brenntemperatur noch entweichen.

Man kommt daher mit weniger Stunden Herstellungszeit aus. In der Regel beträgt diese nicht mehr als insgesamt 8 Stunden, in den meisten Fällen sogar nur 5 bis 6 Stunden.

Je nach eingesetztem Material kann das nach dem erfindungsgemäßen Verfahren hergestellte, tonhaltige Material bei Temperaturen zwischen 600 und 1600°C gebrannt werden, vorzugsweise bei 900 bis 1200°C. Vorzugsweise wird das wasserhaltige Rohmaterial in den auf 300°C vorgeheizten Ofen eingebracht und bei allmählich steigender Temperatur gebrannt.

Erfindungsgemäß wird für das Brennen nur 1 Stunde benötigt, da aufgrund der Faserstruktur ein schnelles Erhitzen möglich ist, ohne daß es zu Verformungen oder Rissen kommt. Denn die beschichteten Fasern lassen Zwischenräume offen, die während des Erhitzens gewissermaßen als Dehnungsfugen wirken.

Der Tonmantel bildet bei gleicher Temperatur eine Kruste, die die Faser umhüllt und die einzelnen Fasern miteinander fest verbindet.

Bei 850-900 °C erfolgt die Sinterung beider Stoffe. Demnach liegen die Temperaturen in der Regel bei 900-1200°C. Insbesondere bei Einsatz von Mineralfasern ist es empfehlenswert, bei Temperaturen von 950°C eine Stunde lang zu brennen. Je nach gewünschter Struktur und Faseranteil kann die Brennzeit auch kürzer sein, im Extremfall sogar nur wenige Minuten.

Bei Verwendung von Fasern mit hohem Schmelzpunkt erhöhen sich Sintertemperaturen bis zu 1600°C. Es ist jedoch nicht in jedem Fall erforderlich, auf die Sintertemperatur zu erhitzen. bie Temperaturen können auch niedriger sein. bie Stabilität wird in diesen Fällen wenig vermindert.

Daher braucht nur bei einer Temperatur in Abhängigkeit von der Sinterungstemperatur der jeweiligen Glasur gebrannt werden. Ein zweimaliges Brennen des Tons, d.h. einmal ohne und einmal mit Glasur, ist bei dem nach dem erfindungsgemäßen Verfahren hergestellten Material nicht erforderlich.

Das Trocknen wird vorzugsweise im Heißluftstrom durchgeführt. bie Brenntemperaturen liegen vorzugsweise zwischen 900 und 1700°C.

Die erfindungsgemäß gebrannten faserhaltigen Materialien zeichnen sich durch ein besonders geringes Gewicht aus. Ebenso sind sie gegen Witterung und chemische Einflüsse beständig und daher auch sehr umweltfreundliche Materialien. Ferner ist eine ausgezeichnete Belastbarkeit beobachtet worden. Und zwar halten die nach dem erfindungsgemäßen Verfahren hergestellten Materialien insbesondere Belastungen stand, die zur Faserrichtung ausgeübt werden. In den Fällen, in denen die eingesetzten Anteile an Fasern und Ton unter jeweils 2 Gew.-% und die des Wasser über 85 Gew.-% liegen, ist das Wärmedämmvermögen besonders gut. Allerdings ist die Belastbarkeit des gebrannten Endproduktes dann sehr gering.

Eine gegenüber herkömmlichen Tonmaterialien völlig neue Eigenschaft ist, daß die nach dem erfindungsgemäßen Verfahren hergestellten Materialien sich durch Flammensintern zusammenschweißen lassen. Außerdem sind sie durch übliche Bindemittel verklebbar. Ebenso wie übliche Tonmaterialien können auch die nach dem erfindungsgemäßen Verfahren hergestellten Materialien weiter glasiert, mit Kunststoffen, Reaktionsharzen, Imprägnierungsmitteln beschichtet oder getränkt werden.

Die nach dem erfindungsgemäßen Verfahren hergestellten Materialien können auf vielfältigen Gebieten eingesetzt werden. So können sie als Bausteine, Bauplatten oder Isoliermaterialien dienen. Weitere Anwendungsgebiete sind die Autoindustrie, die Baustoffindustrie und Filteranlagen. Sehr gut geeignet sind die Materialien für Schalungen. Aufgrund des geringen spezifischen Gewichtes kann man extrem leichte Baustoffe erhalten. Weiterhin eignen sich die nach dem erfindungsgemäßen Verfahren hergestellten Materialien als Holzersatzstoffe, Fassadenplatten, Möbel und Einrichtungselemente, als Trägermaterial für Festbettreaktoren, für die Immobilisierung von Mikroorganismen oder Enzymen, für Biotope und Riffbau, Ofenbau, Feuerschutzelemente, Orthopädie und Herstellung künstlicher Knochen, Gelenke usw. bie nach dem erfindungsgemäßen Verfahren hergestellten Materialien lassen sich gut schneiden und bohren. Es können ebenso wie beim Holz stabile Schraub- oder Klebverbindungen hergestellt werden. Der Vorteil gegenüber Holz liegt in der Witterungsbeständigkeit, Feuerbeständigkeit, dem geringeren Gewicht und der Beständigkeit gegen chemische Einflüsse.

Aufgrund dieser guten Eigenschaften sind auch Anwendungen in der Raumfahrt möglich.

Einige spezielle Zusammensetzungen des gebrannten nach dem erfindungsgemäßen Verfahren hergestellten Materials können den folgenden Biespielen entnommen werden:

```
              Tabelle 4 (Anteile in Gew.-%)
  Beispiel Nr.      7.        8.        9.        10.

  ------------------------------------------------------------

  - Mineralfasern
    Glasfaser        3         4         12        50
    Ton/Ziegelton/
    Schwarzton      97        96         88        50
```

Tabelle 5 (Anteile in Gew.-%)

| Beispiel Nr. | 11. | 12. | 13. | 14. |
|---|---|---|---|---|
| - Mineralfasern | | | | |
| Glasfaser 0,10 - | | | | |
| 10 m | 6 | 10 | 20 | 50 |
| Tone wie oben | 94 | 90 | 80 | 50 |

Tabelle 6 (Anteile in Gew.-%)

| Beispiel Nr. | 15. | 16. | 17. | 18. |
|---|---|---|---|---|
| - Mineralfasern | | | | |
| 0,1 - 10 m | 3 | 4 | 10 | 50 |
| Tone wie oben | 50 | 76 | 45 | 25 |
| Quarzmehl SH | | | | |
| 300 - 500 | 47 | 20 | 45 | 25 |

**Patentansprüche**

1. Verfahren zur Herstellung eines ton- und faserhaltigen Materials, bei welchem Fasern mit einem Durchmesser zwischen 10 und 20 μm mit Ton gemischt, das so erhaltene Material geformt, getrocknet und bei 600 bis 1600° C gebrannt wird,
   **dadurch gekennzeichnet, daß**
   vernetzte Fasern in Form von Wolle oder Matten enthaltend Mineral oder Kohlefasern mit einer Länge von mehr als 0,1 m mit flüssigem Ton oder Gemischen aus Ton, Bentonit und/oder Titandioxid und-/oder Quarz vermischt, bei 250 bis 400° C bis zu zwei Stunden getrocknet, eine Stunde gebrannt und anschließend vier bis fünf Stunden abgekühlt werden.

2. Verfahren gemäß Anspruch 1,
   **dadurch gekennzeichnet, daß**
   die Faserlänge 0,1 bis 10 m beträgt.

3. Verfahren gemäß Anspruch 2,
   **dadurch gekennzeichnet, daß**
   die Faserlänge 1 - 10 m beträgt.

4. Verfahren gemäß einem der Ansprüche 1 - 3,
   **dadurch gekennzeichnet, daß**
   ein Gemisch, bestehend aus 2 bis 13 Gew.-% Fasern , 70 bis 2 Gew.-% Ton bzw. Tongemisch und 28 bis 85 Gew.-% Wasser, eingesetzt wird.

7

**5.** Verfahren gemäß Anspruch 4,

   **dadurch gekennzeichnet,** daß

   ein Gemisch, bestehend aus 2 bis 13 Gew.-% Fasern , 70 bis 13 Gew.-% Ton bzw. Tongemisch und 28 bis 74 Gew.-% Wasser, eingesetzt wird.

**6.** Verfahren zur Herstellung eines ton- und faserhaltigen Materials gemäß einem der Ansprüche 1 - 5 für den Einsatz als Material zur Wärmedämmung,

   **dadurch gekennzeichnet,** daß

   ein Gemisch, bestehend aus 1 Gew.-% Fasern, 1 Gew.-% Ton bzw. Tongemisch und 98 Gew.-% Wasser, eingesetzt wird.

## Claims

**1.** A process for the manufacture of a material containing clay and fibres in which fibres having a diameter between 10 and 20 $\mu$m are mixed with clay, the material thus obtained is molded, dryed and calcined at 600 to 1600°C,

   **characterized in that**

   cross-linked fibres in the form of wool or mats containing mineral or carbon fibres having a length of more than 0,1 m are mixed with liquid clay or mixtures of clay, bentonite and/or titanium dioxide and/or quartz, dryed at 250 to 400°C up to two hours, calcined for one hour and subsequently cooled for four to five hours.

**2.** The process according to claim 1,
   **characterized in that** the fibre length is 0,1 to 10 m.

**3.** The process according to claim 2,
   **characterized in that** the fibre length is 1 to 10 m.

**4.** The process according to any of claims 1 to 3,
   **characterized in that** a mixture consisting of 2 to 13 % by weight fibres, 70 to 2 % by weight clay and clay mixture respectively and 28 to 85 % by weight water is used.

**5.** The process according to claim 4,
   **characterized in that** a mixture consisting of 2 to 13 % by weight fibres, 70 to 13 % by weight clay and clay mixture respectively and 28 to 74 % by weight water is used.

**6.** The process for the manufacture of a material containing clay and fibres according to any of claims 1 to 5 for the application as thermal insulation material,
   **characterized in that** a mixture consisting of 1 % by weight fibres, 1 % by weight clay and clay mixture respectively and 98 % by weight water is used.

## Revendications

**1.** Procédé pour la production d'un matériau contenant de l'argile et des fibres, les quelles ont un diamètre entre 10 n et 20 n , ces dernières sont mélangées avec de l'argile et le matériau ainsi obtenu est démoulé,essuyé et cuit à une température entre 600° C et 1600° C. Procédé caractérisé par le fait que le réticule de fibres, en forme de laine ou matte contenant des fibres minérales ou carboniques d'une longuer de plus de 0.1 m est mélangé avec des mélanges d'argile,bentonite et ou de dioxyde de titane et ou du quarz , soit séché à une témpérature entre 250° C et 400° C pendant quatre ou cinq heures.

**2.** Procédé selon la revendication 1 caractérisé par le fait que la longuer des fibres se situe entre 0,1 m et 10.0 m.

**3.** Procédé selon la revendication 2 caractérisé par le fait que la longuer des fibres se situe entre 1.0 m et 10.0 m

**4.** Procédé selon les revendications de 1 à 3 caractérérisé par le fait que l'on employé un mélange composé de 2% jusqu'a 13% du poids de fibres, 70% à jusqu'à 2% à du poids d'argile respectivement 28% jusqu'à 85% du poids d'eau.

5. Procédé selon la revendication 4 caractérisé par le fait que l'on employe un mélange composé de 2% jusqu'à 13% du poids de fibres,70% jusqu'à 13% du poids d'argile respectivement 28% jusqu'à 74% du poids d'eau.

6. Procédé pour la production d'un matériau contenant de l'argile et des fibres comme décrit dans les revendications 1 à 5 que l'on employe comme matériau d'isolation caractérisé par le fait que l'on utilise un mélange composé de 1% du poids de fibres, 1% du poids d'argile et 98% du poids d'eau.